# EUROPEAN PATENT APPLICATION

(11) **EP 4 815 447 A1**
(43) Date of publication of application: **30.09.2026**
(21) Application number: 25305423.3
(22) Date of filing: 25.03.2025
(51) Int. Cl.: H04N 19/17, G06T 13/40, H04N 19/20, H04N 19/70, H04N 21/44, H04N 21/81, H04N 21/854

(54) **SEMANTIC WEIGHTED PSNR FOR FACIAL BLENDSHAPES**

(71) Applicant: InterDigital CE Patent Holdings, SAS, 75017 Paris (FR)
(72) Inventor: AVRIL, Quentin, 35830 BETTON (FR); COVA REGATEIRO, João Pedro, 35220 CHATEAUBOURG (FR); GOSSELIN, Philippe Henri, 35340 LIFFRE (FR); LE CLERC, Francois, 35590 L'HERMITAGE (FR)
(74) Representative: Vossius & Partner Patentanwälte Rechtsanwälte mbB

(57) **Abstract**

Some embodiments of a method may include: obtaining a set of avatar blendshapes data; obtaining a set of avatar anatomy section names respectively corresponding to the set of avatar blendshapes; obtaining a set of metric weights respectively corresponding to the set of avatar anatomy section names; and determining a set of metric values using the set of metric weights, wherein the set of metric values correspond respectively to the set of avatar blendshapes, and wherein the set of metric values indicate a level of human perception corresponding to changes in the avatar blendshapes data.

## Description

### INCORPORATION BY REFERENCE

The present application incorporates by reference in their entirety the following applications: European Patent Application Serial No. EP25305099, entitled "BLENDSHAPES SET INDEX AND TYPE IN AVATAR REPRESENTATION FORMAT" and filed January 27, 2025 ("'099 application"); European Patent Application Serial No. EP25305070, entitled "BLENDSHAPES RESCALING SIGNALING IN MPEG AVATAR REPRESENTATION FORMAT" and filed January 20, 2025 ("'070 application"); International Patent Application Serial No. PCT/EP2025/054448, entitled "AVATAR BLENDSHAPE SEMANTICS REPRESENTATION" and filed February 19, 2025 ("'448 application"); and European Patent Application Serial No. EP24305326, entitled "AVATAR BLENDSHAPE SEMANTICS REPRESENTATION" and filed March 4, 2024 ("'326 application").

### BACKGROUND

The present application is related to avatar blendshapes.

### SUMMARY

An example method in accordance with some embodiments may include: obtaining a set of avatar blendshapes data associated with an avatar; obtaining a set of avatar anatomy section names respectively corresponding to the set of avatar blendshapes; obtaining a set of metric weights respectively corresponding to the set of avatar anatomy section names; and determining a set of metric values using the set of metric weights, wherein the set of metric values correspond respectively to the set of avatar blendshapes, and wherein the set of metric values indicate a level of human perception corresponding to changes in the avatar blendshapes data.

For some embodiments of the example method, the set of metric values indicate a weighted peak signal to noise ratio (WPSNR).

For some embodiments of the example method, determining the set of metric values using the set of metric weights comprises: obtaining a modified version of the set of set of avatar blendshapes data; determining a set of weighted mean square error (WMSE) values using the set of avatar blendshapes data and the modified version of the set of set of avatar blendshapes data; and determining a set of weighted peak signal to noise ratio (WPSNR) values using the set of WMSE values, wherein the set of metric values is equal to the set of WPSNR values.

For some embodiments of the example method, the set of avatar anatomy section names corresponding to a Facial Action Coding System (FACS)-based naming convention.

Some embodiments of the example method may further include: assembling a set of metric data into an MPEG Avatar Representation Format (ARF)-based format bitstream; and transmitting the MPEG ARF-based format bitstream to a device.

For some embodiments of the example method, the set of metric data comprises at least one of: (1) the set of metric values, (2) the set of metric weights, (3) the set of avatar blendshapes data, and (4) a changed version of the set of avatar blendshapes data.

For some embodiments of the example method, assembling the set of metric data into an MPEG Avatar Representation Format (ARF)-based format bitstream comprises: populating a data structure corresponding to the MPEG Avatar Representation Format (ARF)-based format, wherein the data structure comprises at least one of: a name of the set of metric data, a unique identifier of the set of metric data, and data type of the set of metric data.

For some embodiments of the example method, the data structure further comprises at least one of a description of the set of metric data, a purpose of the set of metric data, and a set of weights data associated with the set of metric data.

For some embodiments of the example method, the data structure further comprises a reference link to the set of weights data associated with the set of metric data.

For some embodiments of the example method, the data structure comprises an extension of a proprietary animation object.

Some embodiments of the example method may further include: training a neural network using the set of metric weights, wherein the neural network is associated with the avatar.

For some embodiments of the example method, training the neural network occurs at runtime of an associated process.

Some embodiments of the example method may further include signaling to another device the set of metric weights used in training the neural network.

For some embodiments of the example method, the set of avatar blendshapes data associated with the avatar is compatible with a standard based on MPEG-I-SD.

An example apparatus in accordance with some embodiments may include: a processor; and a memory storing instructions operative, when executed by the processor, to cause the apparatus to perform any one of the methods listed above.

### BRIEF DESCRIPTION OF THE DRAWINGS

The following detailed description will be better understood when read in conjunction with the appended drawings, in which there are shown examples of one or more of the multiple embodiments of the present application. It should be understood, however, that the embodiments described herein are not limited to the precise arrangements and instrumentalities shown in the drawings. In the drawings:
FIG. 1 is a system diagram illustrating an example set of interfaces for a system according to some embodiments.
FIG. 2 is a schematic illustration showing an example set of MPEG ARF properties according to some embodiments.
FIG. 3 is a schematic illustration showing example blend shape deformations according to some embodiments.
FIG. 4 is a flowchart illustrating an example process for determining a set of metric values indicating a level of human perception according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "In at least one embodiment, ...." For brevity and clarity of presentation, this implied leading clause is not repeated *ad nauseum* in the detailed description.

### DETAILED DESCRIPTION

In describing the various embodiments of the present application, certain terminology is used herein for convenience only and should not be considered as limiting such embodiments. In the drawings, the same reference numerals are employed for designating the same elements throughout the several figures and the present description.

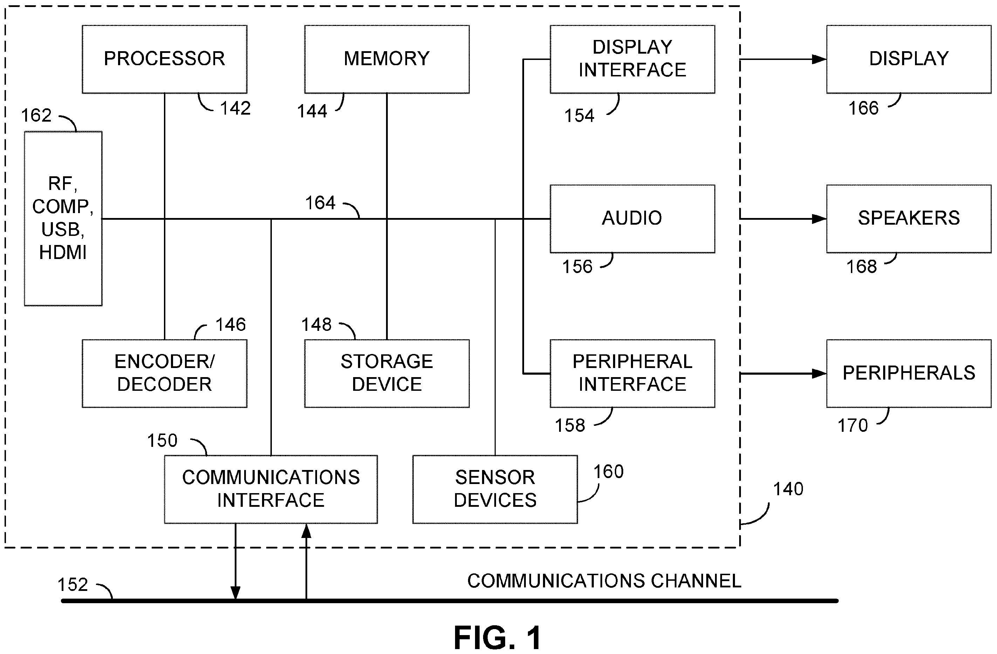

FIG. 1 is a system diagram illustrating an example set of interfaces for a system according to some embodiments. An extended reality display device, together with its control electronics, may be implemented using a system such as the system of FIG. 1. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

A User Equipment (UE) may correspond to any eXtended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

### MPEG-ARF Structure

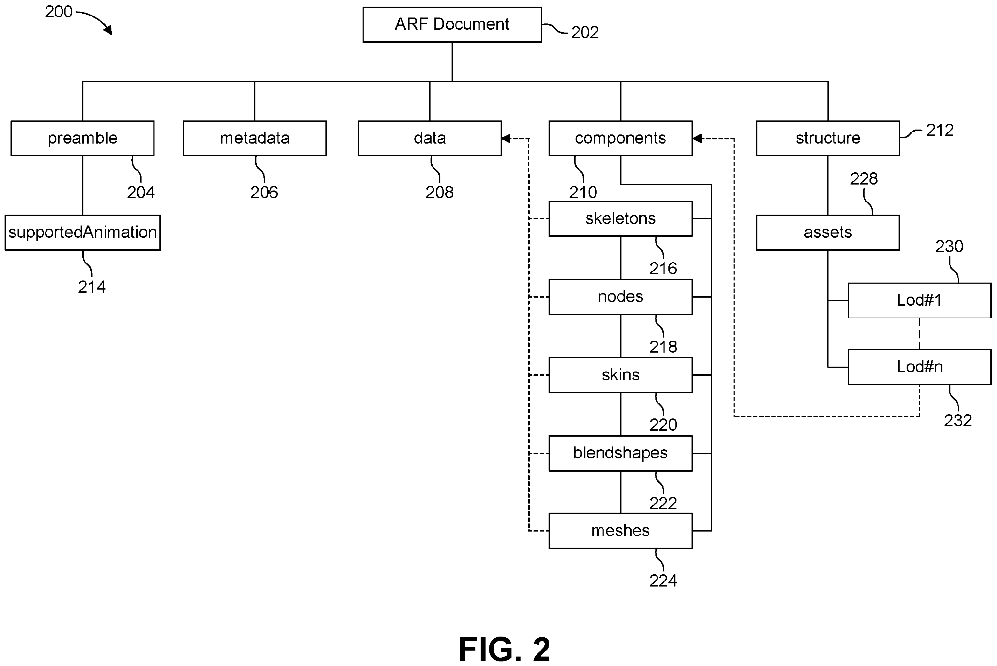

FIG. 2 is a schematic illustration showing an example set of MPEG ARF properties according to some embodiments. MPEG ARF is based on a set of containers regrouped into categories as illustrated in the ARF data model of FIG. 2. The example structure 200 has an ARF document 202 and several categories of containers hanging off the ARF document.

The "preamble" container 204 is used to uniquely identify the format and characteristics of the file. In particular, the "preamble" container 204 contains a "supportedAnimation" property 214 which lists the streaming animation formats that the file supports.

The "metadata" container 206 contains main information, such as age or gender, of the avatar.

The "data" container 208 contains low-level data, like arrays of values, tensors, or references to external files specifying, e.g., the geometry and texture of the avatar. Items of the "data" container 208 are referenced by component items.

The "components" container 210 contains several component containers (skeletons 216, nodes 218, skins 220, blendshapes 222, and meshes 224), which are dedicated to a type of component.

The "structure" container 212 contains the "assets" component 228, which defines the modeling assets for avatar parts (body, hand, head, ...) which may be at several levels of detail (LOD) 230, 232.

This application discusses the computation of Peak Signal-to-Noise Ratio (PSNR) metric for avatar blendshapes in the MPEG Avatar Representation Format (ARF). *See* Avatar Representation Formats, WD of ISO/IEC 23090-39, MDS24542_WG03_N01398, Version 1, WG 03 MPEG Systems (Dec. 16, 2024) ("23090-39 WD"). More precisely, this application discusses a way of computing a weighted PSNR facial blendshapes considering facial semantics and face saliency.

### Blendshape Animation

In computer graphics, the human face is animated through small non-rigid deformations incurred by the activation of facial muscles. These mesh deformers are called Blend Shapes (BS) or Morph Targets (MT). They provide a way to animate an avatar face mesh, and particularly to sculpt facial expressions. They are 3D deformations with respect to the geometry of a base mesh, and they may be represented by 3D offsets to the positions of each vertex of the base mesh. Typically, a base mesh models the avatar with a neutral face expression that shows no emotion. Morph targets are provided in addition to the base mesh. Each morph target is associated with a scalar weight. The desired shape of a mesh is obtained by taking the vertex positions of a base mesh and adding a linear combination of vertex offsets of several morph targets weighted by their corresponding weights. Morph targets may be mapped to the deformations of a neutral face geometry incurred by the activation of facial muscles. Combining these deformations provides a way for artists to sculpt the shape of a face mesh to express a specific emotion.

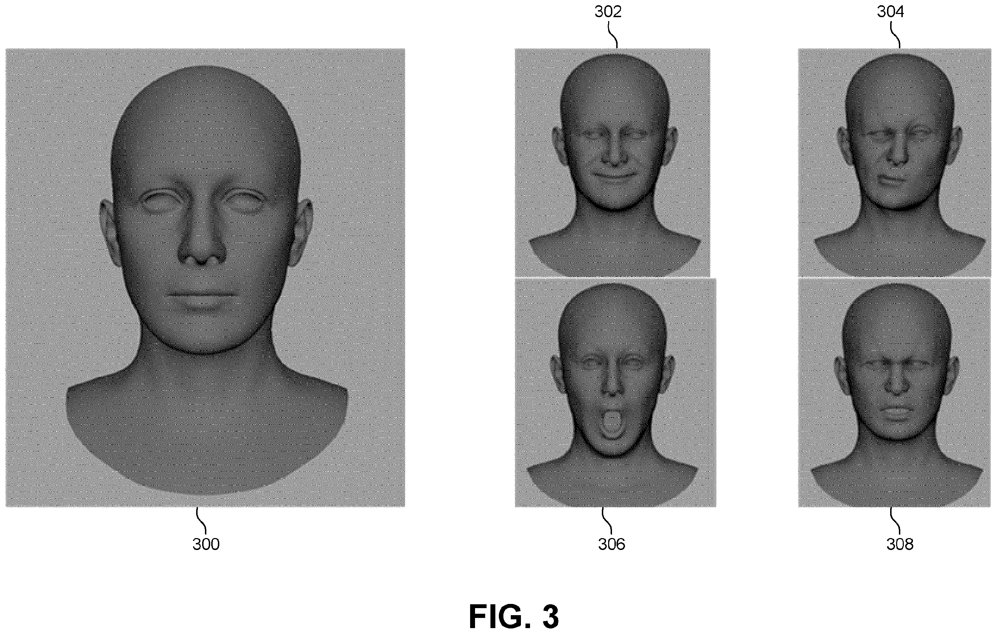

FIG. 3 is a schematic illustration showing example blend shape deformations according to some embodiments. FIG. 3 shows several examples of blend shape deformations. The face 300 with a straight mouth shows an example neutral face. The other faces 302, 304, 306, 308 show examples of expressive faces sculpted using blend shapes deformations.

### Peak Signal-to-Noise Ratio (PSNR)

Peak Signal-to-Noise Ratio (PSNR) is a widely used metric in video compression to measure the quality of a compressed video compared to its original version. PSNR quantifies the ratio between the maximum possible power of a signal and the power of corrupting noise that affects the fidelity of its representation. PSNR is expressed in decibels (dB) and is calculated using the mean squared error (MSE) between the original and compressed video frames. Higher PSNR values indicate better quality because they represent lower levels of distortion introduced by compression. Typical PSNR values for lossy video compression range from 30 to 50 dB, with higher values indicating better quality. Despite its simplicity and widespread use, PSNR may not always align perfectly with human perception of video quality, and other metrics, like Structural Similarity Index Measure (SSIM), Learned Perceptual Image Patch Similarity (LPIPS), and Video Multimethod Assessment Fusion (VMAF), are also used for comprehensive assessments.

### PSNR-Blendshapes

During MPEG meeting #149, the University of Xidian (China) proposed a contribution titled, Assessing Compressed Blendshape-Based Avatar Facial Animation: Objective Metrics vs. Subjective Scores, (contribution m71323) in which they presented "PSNR-BS+HP" as a metric to compute PSNR on blendshapes data. They consider direct computation of PSNR in the blendshapes (BS) and Head Pose (HP) domain. The present application, though, considers only blendshapes (BS) data.

Contribution m71323 defines MSE in the BS domain as shown in Eq. 1: ${MSE}_{BS} \left(t\right) = \frac{1}{K} {\sum }_{i = 1}^{K} {\left(BS_{ori}_{i}\left(t\right)-BS_{dis}_{i}\left(t\right)\right)}^{2}$ in which MSE_{BS}(t) is the mean square error for each time index (frame) t of the BS, respectively. *K* is the number of BS weights used in the application, respectively. The functions *BS_oriᵢ*(*t*) and *BS_disᵢ*(*t*) are the i-th original and reconstructed BS weights at frame t. For each time index, the PSNR value may be obtained by Eq. 2: $PSNR _ BS \left(t\right) = 10 ⋅ log \left(\frac{{R}_{BS}^{2}}{{MSE}_{BS} \left(t\right)}\right)$

*R_{BS}* is the peak-to-peak range of the BS weights. The PSNR for the complete sequence may be obtained by averaging together all PSNR per frame, as shown in Eq. 3: $PSNR _ BS {\left(t\right)}_{avg} = \frac{1}{F} {\sum }_{t = 1}^{F} PSNR - BS \left(t\right)$ in which F is the number of frames in the sequence.

A drawback to PSNR is that PSNR does not always align perfectly with human perception. In video compression, for example, a higher PSNR value would not mean that 100% of the time the video quality is perceived by everybody better than a lower PSNR. The reason is because, depending on where the compression artifacts are located in the video (background, faces, objects, etc.), a person's brain perceives and interprets these artifacts differently. A major artifact in the background may highly impacting the PSNR value, may not interfere with the global perception of the video and may be seen as acceptable. Whereas subtle micro changes on the actor's face, not impacting the PSNR value as much, may be interpreted as strongly uncanny and too damaging in terms of compression artifacts. The face attracts significantly more visual attention than background. Human perception is complex and when dealing with facial identity and facial expression, the human brain is especially sensitive to subtle variations. When computing PSNR on blend shapes weights, which are responsible for facial deformations, the sensitivity is similar. People do not perceive all facial deformations the same way. A very little deformation on the gaze direction of one eye has a major impact on the global facial perception, whereas a similar deformation in intensity applied to the lips has a lower impact on the global perception. Similarly, slightly raising the eyebrows has more impact on the interpretation of a facial expression than slightly raising the chin. This observation means that the blend shapes should be considered differently and not equally when computing a PSNR value on blend shapes data.

### Weighted PSNR for Blend Shapes

When computing PSNR on facial blend shapes, blend shapes may be weighted according to their importance in facial expression perception. The equation for Weighted Mean Square Error (WMSE) in the blend shape domain may be defined as shown in Eq. 4: ${WMSE}_{BS} \left(t\right) = \frac{1}{K} \frac{{\sum }_{i = 1}^{K} {w}_{i} {\left(B{S}_{or {i}_{i} \left(t\right)}-B{S}_{di {s}_{i} \left(t\right)}\right)}^{2}}{{\sum }_{i = 1}^{K} {w}_{i}}$ in which WMSE_{BS}(t) is the weighted mean square errors for each time index (frames) *t* of the BS weights, respectively. *K* is the number of blend shape weights used in the application, respectively. *BS_oriᵢ(t)* and *BS_disᵢ(t)* are the *i*-th original and reconstructed BS weights for frame *t. wᵢ* is the weight assigned to the *i*-th blend shape weight. For each time index, the Weighted PSNR (WPSNR) value may be obtained from Eq. 5: $WPSNR _ BS \left(t\right) = 10 ⋅ log \left(\frac{{R}_{BS}^{2}}{{WMSE}_{BS} \left(t\right)}\right)$

### Predetermined Blend Shape Weights

Table 1 may be used to get the corresponding weight for each blend shape. Table 1 lists blendshape weights used to compute the Weighted PSNR Blendshape metric. Table 1 is based on the Facial Action Coding System (FACS) naming convention defined and used in anatomy to classify human facial motions according to the book Ekman, P. and Friesen, W. V., The Facial Action Coding System: A Technique for the Measurement of Facial Movement, CONSULTING PSYCHOLOGISTS PRESS (1978) ("Ekman")*.* They are the blend shapes of Morgan, the MPEG reference character in MPEG-I-SD according to Text of ISO/IEC DIS 23090-14:2021(E) Information Technology - Coded Representation of Immersive Media - Part 14: Scene Description for MPEG Media, FDIS comments, ISO/IEC DIS 23090-14:2021(E) ("23090-14 2021")*.* Shapes may be separated into Left ("_L") and Right ("_R") components. Sometimes these Left and Right components also may be split into ("_1") and ("_2") sub-components to increase the precision.

**Table 1.**

| **AU** | **FACS Name** | **Weight *w* for PSNR** |
|---|---|---|
| 1 | Inner Brow Raiser | 1 |
| 2 | Outer Brow Raiser | 1 |
| 4 | Brow Lowerer | 1 |
| 5 | Upper Lid Raiser | 1 |
| 6 | Cheek Raiser | 0.5 |
| 7 | Lid Tightener | 1 |
| 9 | Nose Wrinkler | 0.2 |
| 10 | Upper Lip Raiser | 0.7 |
| 11 | Nasolabial Deepener | 0.5 |
| 12 | Lip Corner Puller | 0.7 |
| 14 | Dimpler | 0.7 |
| 15 | Lip Corner Depressor | 0.7 |
| 16 | Lower Lip Depressor | 0.7 |
| 17 | Chin Raiser | 0.1 |
| 18 | Lip Pucker | 0.7 |
| 20 | Lip Stretcher | 0.7 |
| 22 | Lip Funneler | 0.7 |
| 23 | Lip Tightener | 0.7 |
| 24 | Lip Pressor | 0.7 |
| 26 | Jaw Drop | 0.5 |
| 27 | Mouth Stretch | 0.7 |
| 28 | Lip Suck | 0.7 |
| 29 | Jaw Thrust | 0.5 |
| 30 | Jaw Sideways | 0.5 |
| 31 | Jaw Clencher | 0.5 |
| 34 | Cheek Puff | 0.1 |
| 38 | Nostril Dilator | 0.1 |
| 43 | Eyes Closed | 1 |
| 61 | Eyes Turn Left | 1 |
| 62 | Eyes Turn Right | 1 |
| 63 | Eyes Up | 1 |
| 64 | Eyes Down | 1 |

Table 1 has been built based on the studies Karczmarek, P., et al., A Study in Facial Features Saliency in Face Recognition: An Analytic Hierarchy Process Approach, SPRINGER: SOFT COMPUTING, (2017) ("Karczmarek") and Ren, Y., et al., Learning-Based Saliency Detection of Face Images, IEEE (2017) ("Ren")*.*

These two papers highlight the observation that the most salient facial regions are the eyes and the mouth. The less salient areas are the nose, the chin, and the cheeks. Following the process of recognition by people or by computers, the face may be partitioned into the areas of eyebrows, eyes, nose, mouth, cheeks, and chin. A specific weight may be applied to each of these partitions.

### Signaling in MPEG-ARF for AI Use

A metric may be used for training a neural network as a loss function to optimize. If the training process is standardized, the training process maybe run once at the beginning or run perpetually at runtime. If the training process is performed several times at runtime on a device, the training values may be signaled in the related avatar file format. The present application introduces a new signaling of metric properties in a human readable file format for encoding an avatar instance (like the MPEG Avatar Representation Format (ARF)) *See* 23090-39 WD.

The component proprietaryAnimations may be extended to provide information on how to use an external Machine Learning (ML) model to reconstruct or animate assets in the ARF container. Table 2 lists components of a proprietary animation object. Values with an "M" in the Use column indicate mandatory components. Values with an "O" in the Use column indicate optional components.

**Table 2.**

| **Name** | **Type** | **Use** | **Description** |
|---|---|---|---|
| id | number | M | A unique identifier of this proprietary animation scheme. |
| scheme | URI | M | A vendor-specific URN to identify the proprietary reconstruction and animation scheme. |
| items | array(number) | M | A list of data item references, e.g., pretrained models or model weights, that are used by this proprietary reconstruction and animation scheme. |
| metrics | Metric[1-*] | O | Specifies a unique identifier of this object within ARF document. |

Table 3 lists properties of the Metric object. The "metrics" property contains a list of metric definitions. Each item in this list is a *Metric* object, which is defined in Table 3. Values with an "M" in the Use column indicate mandatory components. Values with an "O" in the Use column indicate optional components.

**Table 3.**

| **Name** | **Type** | **Use** | **Description** |
|---|---|---|---|
| name | string | M | Name of the metric |
| id | integer | M | A unique identifier of the metric |
| description | string | O | The description of the metric |
| purpose | string | O | The purpose of the metric |
| uri | string | M | Metric type defined as a urn or mimeType |
| weights | number[] | O | Weights data content or reference to the weights data content |

The "*name*" property defines the name of the metric. The "*name*" property may be used for indexing, e.g., to retrieve the metric knowing its name. For example, "Weighted PSNR Blendshapes"

The "*id*" property defines a unique identity of the metric "WPSNR_BS_1_0".

The *"description"* property describes the metric. For instance, a description may be used in user interfaces to help the user understand what the metric is computing.

The *"purpose"* property defines the purpose of the metric. These purposes may be defined by an application or a standard, for instance. For example, "urn:mpeg:avatar:metric:psnr:weighted_blendshapes" may be used to indicate that this metric computes a weighted PSNR on the blendshape domain.

The "*uri*" property contains the type of the metric as a urn or a mimeType. The data encoding schema is the same as the one used for the "*uri*" property in RawData of MPEG-ARF according to 23090-39 *WD,* which may use a base64 encoding of the data, a URL or the name of a file.

The *"weights"* property contains the weights used for computing the metric. The *"weights"* property may be used to reference the weights (as defined in Table 1). In some embodiments, the *"weights"* property may be a reference to the weights data content.

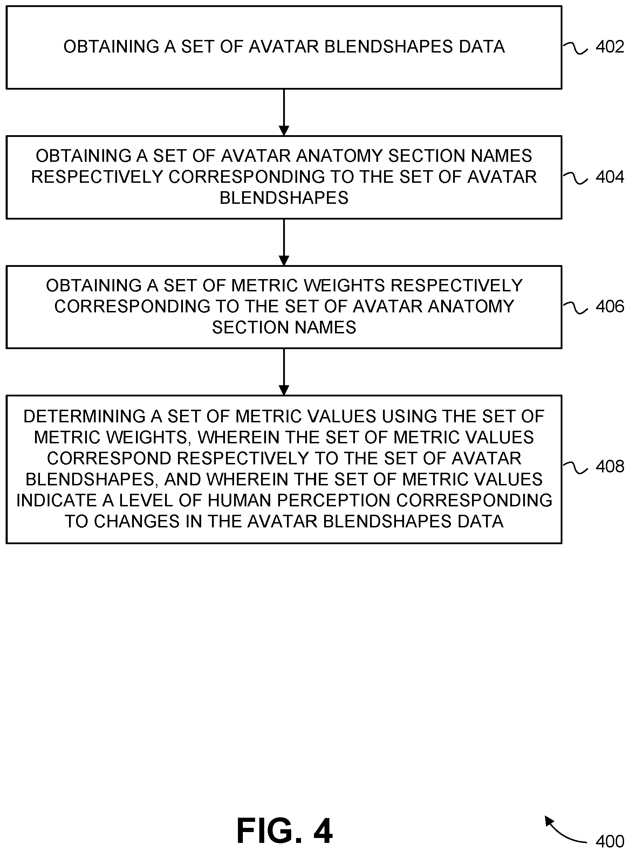

FIG. 4 is a flowchart illustrating an example process for determining a set of metric values indicating a level of human perception according to some embodiments. For some embodiments, an example process 400 may include obtaining 402 a set of avatar blendshapes data. For some embodiments, the example process 400 may further include obtaining 404 a set of avatar anatomy section names respectively corresponding to the set of avatar blendshapes. For some embodiments, the example process 400 may further include obtaining 406 a set of metric weights respectively corresponding to the set of avatar anatomy section names. For some embodiments, the example process 400 may further include determining 408 a set of metric values using the set of metric weights, wherein the set of metric values correspond respectively to the set of avatar blendshapes, and wherein the set of metric values indicate a level of human perception corresponding to changes in the avatar blendshapes data.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining a set of avatar blendshapes data associated with an avatar; obtaining a set of avatar anatomy section names respectively corresponding to the set of avatar blendshapes; obtaining a set of metric weights respectively corresponding to the set of avatar anatomy section names; and determining a set of metric values using the set of metric weights, wherein the set of metric values correspond respectively to the set of avatar blendshapes, and wherein the set of metric values indicate a level of human perception corresponding to changes in the avatar blendshapes data.

For some embodiments of the example method, the set of metric values indicate a weighted peak signal to noise ratio (WPSNR).

For some embodiments of the example method, determining the set of metric values using the set of metric weights comprises: obtaining a modified version of the set of set of avatar blendshapes data; determining a set of weighted mean square error (WMSE) values using the set of avatar blendshapes data and the modified version of the set of set of avatar blendshapes data; and determining a set of weighted peak signal to noise ratio (WPSNR) values using the set of WMSE values, wherein the set of metric values is equal to the set of WPSNR values.

For some embodiments of the example method, the set of avatar anatomy section names corresponding to a Facial Action Coding System (FACS)-based naming convention.

Some embodiments of the example method may further include: assembling a set of metric data into an MPEG Avatar Representation Format (ARF)-based format bitstream; and transmitting the MPEG ARF-based format bitstream to a device.

For some embodiments of the example method, the set of metric data comprises at least one of: (1) the set of metric values, (2) the set of metric weights, (3) the set of avatar blendshapes data, and (4) a changed version of the set of avatar blendshapes data.

For some embodiments of the example method, assembling the set of metric data into an MPEG Avatar Representation Format (ARF)-based format bitstream comprises: populating a data structure corresponding to the MPEG Avatar Representation Format (ARF)-based format, wherein the data structure comprises at least one of: a name of the set of metric data, a unique identifier of the set of metric data, and data type of the set of metric data.

For some embodiments of the example method, the data structure further comprises at least one of a description of the set of metric data, a purpose of the set of metric data, and a set of weights data associated with the set of metric data.

For some embodiments of the example method, the data structure further comprises a reference link to the set of weights data associated with the set of metric data.

For some embodiments of the example method, the data structure comprises an extension of a proprietary animation object.

Some embodiments of the example method may further include: training a neural network using the set of metric weights, wherein the neural network is associated with the avatar.

For some embodiments of the example method, training the neural network occurs at runtime of an associated process.

Some embodiments of the example method may further include signaling to another device the set of metric weights used in training the neural network.

For some embodiments of the example method, the set of avatar blendshapes data associated with the avatar is compatible with a standard based on MPEG-I-SD.

An example apparatus in accordance with some embodiments may include: a processor; and a memory storing instructions operative, when executed by the processor, to cause the apparatus to perform any one of the methods listed above.

One or more embodiments provide a computer program including instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods include one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present application may refer to "determining" various pieces of information. Determining information may include one or more of, for example, estimating, calculating, predicting, or retrieving (e.g., from memory) the information.

The present application may refer to "accessing" various pieces of information. Accessing information may include one or more of, for example, receiving, retrieving (e.g., from memory), storing, moving, copying, calculating, determining, predicting, or estimating the information. Similarly, the present application may refer to "receiving" various pieces of information. Receiving information may include one or more of, for example, accessing or retrieving (e.g., from memory) the information.

It is to be understood that use of any of the following "/", "and/or", and "at least one of' is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present application or the following claims. Although features and elements are described herein in particular combinations, those of ordinary skill in the art will appreciate that such features or elements may be used alone or in any combination with the other features and elements. It is understood, therefore, that the overall teachings of the present application are not limited to the particular embodiments, implementations, and examples disclosed herein, but are intended to cover variations, modifications, and alternatives as defined by the appended claims and any and all equivalents thereof.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

Various numeric values may be used in the present application, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
obtaining a set of avatar blendshapes data associated with an avatar;
obtaining a set of avatar anatomy section names respectively corresponding to the set of avatar blendshapes;
obtaining a set of metric weights respectively corresponding to the set of avatar anatomy section names; and
determining a set of metric values using the set of metric weights,
wherein the set of metric values correspond respectively to the set of avatar blendshapes, and
wherein the set of metric values indicate a level of human perception corresponding to changes in the avatar blendshapes data.

2. The method of claim 1, wherein the set of metric values indicate a weighted peak signal to noise ratio (WPSNR).

3. The method of any one of claims 1-2, wherein determining the set of metric values using the set of metric weights comprises:
obtaining a modified version of the set of set of avatar blendshapes data;
determining a set of weighted mean square error (WMSE) values using the set of avatar blendshapes data and the modified version of the set of set of avatar blendshapes data; and
determining a set of weighted peak signal to noise ratio (WPSNR) values using the set of WMSE values,
wherein the set of metric values is equal to the set of WPSNR values.

4. The method of any one of claims 1-3, wherein the set of avatar anatomy section names corresponding to a Facial Action Coding System (FACS)-based naming convention.

5. The method of any one of claims 1-4, further comprising:
assembling a set of metric data into an MPEG Avatar Representation Format (ARF)-based format bitstream; and
transmitting the MPEG ARF-based format bitstream to a device.

6. The method of claim 5, wherein the set of metric data comprises at least one of: (1) the set of metric values, (2) the set of metric weights, (3) the set of avatar blendshapes data, and (4) a changed version of the set of avatar blendshapes data.

7. The method of any one of claims 5-6, wherein assembling the set of metric data into an MPEG Avatar Representation Format (ARF)-based format bitstream comprises:
populating a data structure corresponding to the MPEG Avatar Representation Format (ARF)-based format,
wherein the data structure comprises at least one of: a name of the set of metric data, a unique identifier of the set of metric data, and data type of the set of metric data.

8. The method of claim 7, wherein the data structure further comprises at least one of a description of the set of metric data, a purpose of the set of metric data, and a set of weights data associated with the set of metric data.

9. The method of any one of claims 7-8, wherein the data structure further comprises a reference link to the set of weights data associated with the set of metric data.

10. The method of any one of claims 7-9, wherein the data structure comprises an extension of a proprietary animation object.

11. The method of any one of claims 1-10, further comprising:
training a neural network using the set of metric weights,
wherein the neural network is associated with the avatar.

12. The method of claim 11, wherein training the neural network occurs at runtime of an associated process.

13. The method of claim 12, further comprising signaling to another device the set of metric weights used in training the neural network.

14. The method of any one of claims 1-13, wherein the set of avatar blendshapes data associated with the avatar is compatible with a standard based on MPEG-I-SD.

15. An apparatus comprising:
a processor; and
a memory storing instructions operative, when executed by the processor, to cause the apparatus to perform the method of any one of claims 1 through 14.
